(19) Europäisches Patentamt

European Patent Office

Office européen des brevets

(11) Veröffentlichungsnummer: **0 444 437 A1**

(12) **EUROPÄISCHE PATENTANMELDUNG**

(21) Anmeldenummer: 91101493.4

(22) Anmeldetag: 05.02.91

(51) Int. Cl.⁵: **C01B 25/30**

(30) Priorität: 21.02.90 DE 4005394

(43) Veröffentlichungstag der Anmeldung:
04.09.91 Patentblatt 91/36

(84) Benannte Vertragsstaaten:
**DE NL**

(71) Anmelder: **HOECHST AKTIENGESELLSCHAFT**
**Postfach 80 03 20**
**W-6230 Frankfurt am Main 80(DE)**

(72) Erfinder: **Peters, Dieter, Dr.**
**Schaesbergstrasse 3**
**W-5030 Hürth(DE)**
Erfinder: **Los, Cornelis Jan**
**Veersemeerstraat 10**
**NL-4456 AZ Lewedorp(NL)**
Erfinder: **Schreij, Eduard Johan**
**Swaalingestraat 16**
**NL-4374 BX Zoutelande(NL)**
Erfinder: **Snelting, Gerrit Mynardus**
**Gerbrandystraat 129 A**
**NL-4384 NE Vlissingen(NL)**
Erfinder: **Kaasschieter, Johannes**
**Thibautstraat 36**
**NL-4336 EB Middelburg(NL)**

(54) **Verfahren zur Herstellung von Trialkaliphosphatlösung.**

(57) Es wird ein Verfahren zur Herstellung von Trialkaliphosphatlösung aus Neutralisationsschlämmen, welche bei der Neutralisation roher Naßverfahrensphosphorsäure anfallen, angegeben, welches dadurch gekennzeichnet ist, daß man

a) den Neutralisationsschlamm mit Alkalihydroxid aufschließt und dabei ein Alkalioxid : $P_2O_5$-Molverhältnis von (3,0 bis 3,7) : 1 in der gebildeten Maische einstellt,

b) den Aufschluß des Neutralisationsschlammes gemäß a) bei Temperaturen von 90 bis 120 °C und Reaktionszeiten von 1 bis 10 Minuten durchführt,

c) in der gebildeten Maische durch Verdünnen mit Wasser eine Konzentration von 6 bis 8 Gew.-% wassergelöstes $P_2O_5$ einstellt,

d) die Maische auftrennt in die gewünschte Trialkaliphosphatlösung und einen Filterkuchen,

e) den Filterkuchen mit Wasser wäscht und einen Teil dieses Waschwassers anschließend zum Verdünnen der Maische nach c) rückführt und

f) das restliche Waschwasser zur Nachwaschung der bei der Neutralisation der Naßverfahrensphosphorsäure anfallenden Neutralisationsschlämme verwendet.

Fig. 2

Die vorliegende Erfindung betrifft ein Verfahren zur Herstellung von Trialkaliphosphatlösung aus Neutralisationsschlämmen, welche bei der Neutralisation roher Naßverfahrensphosphorsäure anfallen.

Bei der Neutralisationsreinigung von Naßverfahrensphosphorsäure fällt bei erhöhtem pH-Wert ein Neutralisationsschlamm aus, der hauptsächlich aus den Phosphaten des Eisens, Aluminiums, Calciums und Magnesiums besteht.

Wird dieser Neutralisationsschlamm verworfen, so ergeben sich für das Neutralisationsverfahren $P_2O_5$-Verluste, die zwischen 10 und 20 Gew.-%, bezogen auf in Form von Rohphosphorsäure eingesetztes $P_2O_5$, betragen.

In der DE-C-17 67 631 wird vorgeschlagen, diesen Neutralisationsschlamm in Gegenwart von kieselsäurehaltigen Verbindungen und Alkalilauge bei Temperaturen oberhalb von 90 ° zu erhitzen. Hierbei soll in dem Aufschlußverfahren ein $Na_2O$ : $P_2O_5$-Molverhältnis von (4 bis 4,5) : 1 eingehalten werden. Dieser Maische wird dann anschließend Phosphorsäure bis zu einem $Na_2O$ : $P_2O_5$-Molverhältnis gleich (2,5 bis 3,5) : 1 zugesetzt und durch Verdünnen eine $P_2O_5$-Konzentration in der Maische von 6 bis 10 Gew.-% eingestellt.

Nachteilig bei diesem Verfahren ist der Phosphorsäureeinsatz, der zur Rückstellung der stark alkalihaltigen Maische benötigt wird. Der Phosphorsäurezusatz und die starke Verdünnung auf eine Konzentration von ≤ 10 Gew.-% $P_2O_5$ ist notwendig, damit der Feststoff aus der Maische abfiltriert werden kann. Bei schlechter Filtrierbarkeit verbleibt ein Großteil wasserlösliches $P_2O_5$ im abgetrennten Filterkuchen.

Es war daher die Aufgabe gestellt, bei der Neutralisationsschlammaufbereitung die Filtrationseigenschaften der hierbei anfallenden Maische so zu verbessern, daß kein wesentlicher Verlust an wasserlöslichem $P_2O_5$ mit dem aus der Maische abgetrennten Filterkuchen erfolgt und kein Zusatzwasser benötigt wird.

Das Verfahren der Erfindung ist nunmehr dadurch gekennzeichnet, daß man

a) den Neutralisationsschlamm mit Alkalihydroxid aufschließt und dabei ein Alkalioxid : $P_2O_5$-Molverhältnis von (3,0 bis 3,7) : 1 in der gebildeten Maische einstellt,

b) den Aufschluß des Neutralisationsschlammes gemäß a) bei Temperaturen von 90 bis 120 ° C und Reaktionszeiten von 1 bis 10 Minuten durchführt,

c) in der gebildeten Maische durch Verdünnen mit Wasser eine Konzentration von 6 bis 8 Gew.-% wassergelöstes $P_2O_5$ einstellt,

d) die Maische in die gewünschte Trialkaliphosphatlösung und einen Filterkuchen auftrennt,

e) den Filterkuchen mit Wasser wäscht und einen Teil dieses Waschwassers anschließend zum Verdünnen der Maische nach c) rückführt und

f) das restliche Waschwasser zur Nachwaschung der bei der Neutralisation der Naßverfahrensphosphorsäure anfallenden Neutralisationsschlämme verwendet.

Das erfindungsgemäße Verfahren kann weiterhin wahlweise auch noch dadurch ausgestaltet sein, daß man

aa) das zum Aufschluß eingesetzte Alkalihydroxid mit dem rückgeführten Waschwasser vor dem Aufschluß verdünnt,

bb) als Alkalihydroxid 40 bis 50 gewichtsprozentige Natronlauge verwendet,

cc) den Filterkuchen, welcher aus der Maische abgetrennt wird, mit 50 bis 150 kg Waschwasser, berechnet auf 100 kg Filtrat, wäscht,

dd) das Waschwasser auf 70 bis 100 ° C vorwärmt.

Mit dem erfindungsgemäßen Verfahren ist es nunmehr möglich, das im Neutralisationsschlamm der Naßverfahrensphosphorsäure enthaltene $P_2O_5$ mit einer Gesamtausbeute von 96 bis 97,5 %, bezogen auf in Form von Rohphosphorsäure eingesetztes $P_2O_5$, in Form einer 6 bis 8 gewichtsprozentigen Trialkaliphosphatlösung zu gewinnen, wobei die als Zwischenprodukt gewonnene Trialkaliphosphatlösung, ohne Rückeinstellung mit Phosphorsäure, ein Alkalioxid : $P_2O_5$-Molverhältnis von (3,0 bis 3,7) : 1 hat. Die beim Verfahren anfallende Maische ist gut filtrierbar. Die Mutterlauge ist aus dem Filterkuchen leicht mit Wasser auswaschbar. Es hat sich weiter in völlig überraschender Weise ergeben, daß die Filtertücher der Filterpressen zur Abtrennung des Neutralisationsschlammes wesentlich längere Filterstandzeiten aufweisen, wenn mindestens 2/3 des gesamten Waschwassers für den Neutralisationsfilterkuchen aus der Filterkuchen-Waschung der Maische stammt. Hierbei werden die Filterstandzeiten zwischen 10 und 20 % sowie die Filterkapazität um ca. 10 % erhöht. Unter Filterstandzeit wird die Anzahl der Zyklen verstanden, nach welcher die Poren der Filtertücher mit einer Säurereinigung gründlich gesäubert werden müssen.

Der Unterschied zur herkömmlichen Neutralisationsschlammaufarbeitung wird anhand der beigefügten Verfahrensschemata verdeutlicht.

Fig. 1   zeigt die herkömmliche Arbeitsweise gemäß der DE-C-17 67 631.

Fig. 2   zeigt eine vorteilhafte Ausführung der erfindungsgemäßen Arbeitsweise.

Bei der herkömmlichen Arbeitsweise gemäß der DE-C-17 67 631 (Fig. 1) wird der bei der Neutralisation von Naßverfahrensphosphorsäure anfallende Neutralisationsschlamm dem Filter 1 über Leitung 4 zugeführt. Die filtrierte Alkaliphosphatlösung wird über Leitung 5 abgezogen; der filterfeuchte Filterkuchen wird aus dem Filter 1 über Leitung 6 dem Anmaischbehälter 2 zugeführt. Im Anmaischbehälter 2 wird der Filterkuchen unter Zusatz einer kieselsäurehaltigen Verbindung 2 Stunden lang bei 110 °C mit Natronlauge, über Leitung 9 zugeführt, gerührt, wobei ein $Na_2O$ : $P_2O_5$-Molverhältnis von (4,0 bis 4,5) : 1 eingestellt wird. Nach Abkühlung auf etwa 80 °C wird Phosphorsäure über Leitung 7 zugesetzt, bis ein $Na_2O$ : $P_2O_5$-Molverhältnis von 2,77 : 1 vorliegt. Waschwasser aus dem Filter 3 wird über Leitung 8 in die Maische rückgeführt und dadurch wird die Maische auf einen Gehalt von 8,2 Gew.-% $P_2O_5$ verdünnt. Über Leitung 10 wird die Maische auf das Filter 3 gefördert und hier in Filterkuchen und Filtrat getrennt. Das Filtrat wird über Leitung 11 der weiteren Verarbeitung zugeführt. Der Filterkuchen im Filter 3 wird mit Waschwasser über Leitung 13 behandelt und danach über Leitung 12 ausgeschleust.

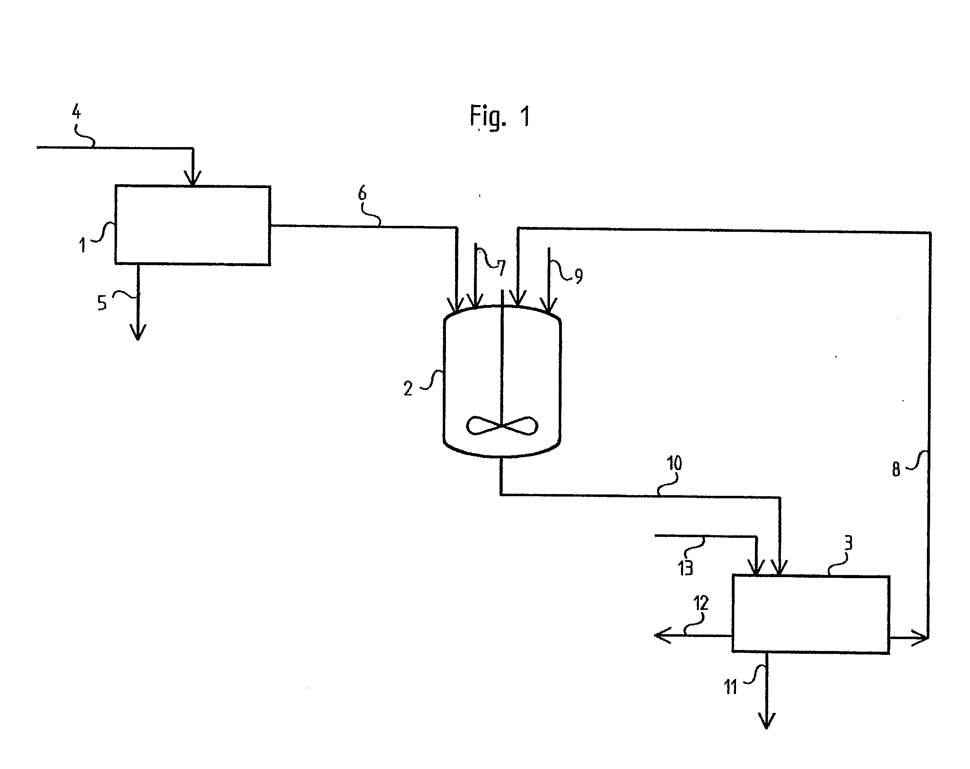

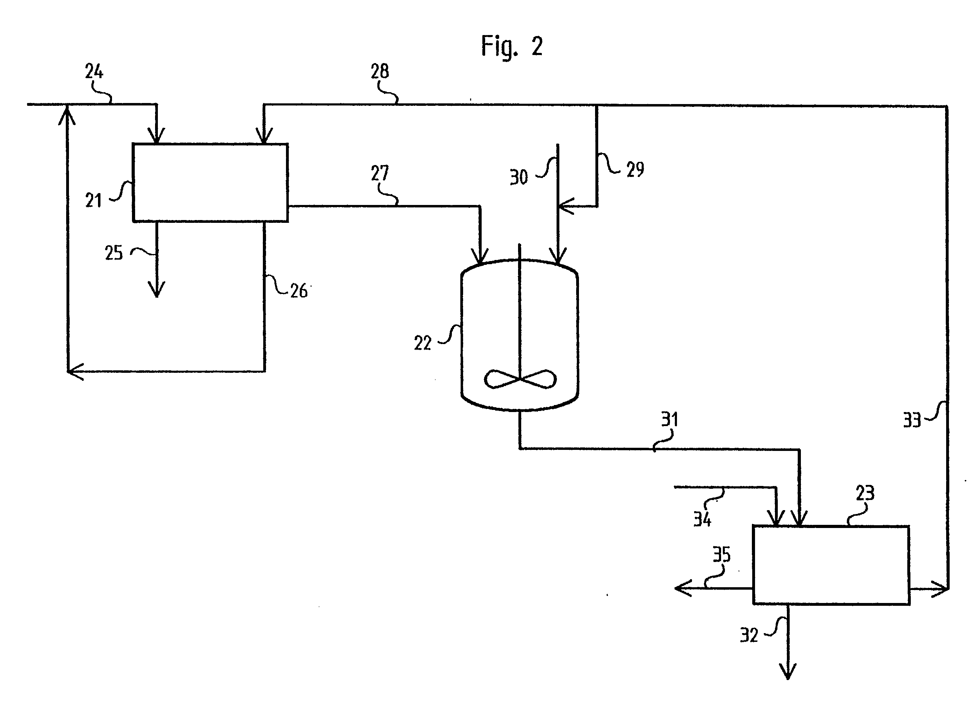

Bei der erfindungsgemäßen Arbeitsweise (Fig. 2) wird der bei der Neutralisation von Naßverfahrensphosphorsäure anfallende Neutralisationsschlamm dem Filter 21 über Leitung 24 zugeführt. Die Alkaliphosphatlösung wird über Leitung 25 abgezogen. Der im Filter 21 abgetrennte Filterkuchen wird vor der Überführung in den Anmaischbehälter 22 mit einem Teil des Waschwassers aus der Filterkuchen-Waschung des Filters 23, eventuell mit Wasser verdünnt, über Leitung 28 gewaschen. Das beladene Waschwasser des Filters 21 wird über Leitung 26 mit der Alkaliphosphatlösung zur Verdünnung der Suspension des Neutralisationsschlammes der Leitung 24 zugeführt.

Der Filterkuchen des Filters 21 wird über Leitung 27 dem Anmaischbehälter 22 zugeführt und mit Natronlauge über Leitung 30, die mit Waschwasser über die Leitungen 33 und 29 aus dem Filter 23 verdünnt wird, auf ein $Na_2O$ : $P_2O_5$-Molverhältnis von (3,0 bis 3,7) : 1 eingestellt und 1 bis 10 Minuten bei 100 °C gerührt. Die erhaltene Maische wird über Leitung 31 dem Filter 23 zugeführt. Die filtrierte Alkaliphosphatlösung enthält 6 bis 8 Gew.-% $P_2O_5$ und verläßt das Filter 23 über Leitung 32. Der abgetrennte Filterkuchen wird mit Waschwasser über Leitung 34 gewaschen und über Leitung 35 entnommen. Das Waschwasser des Filters 23 wird über Leitung 33 abgezogen. Die Leitung 33 verzweigt sich in die Leitungen 28 und 29.

Anhand des Beispiels wird das erfindungsgemäße Verfahren näher erläutert:

Beispiel

Bei der Neutralisation von Naßverfahrensphosphorsäure anfallender Neutralisationsschlamm wurde über die Leitung 24 dem Filter 21 zugeführt. Die hierbei abgetrennte Alkaliphosphatlösung wurde über Leitung 25 entnommen. Der abfiltrierte Neutralisationsschlamm wurde im Filter 21 mit verdünnter Alkaliphosphatlösung über Leitung 28 gewaschen; das dabei anfallende Filtrat wurde über Leitung 26 zur Verdünnung des Neutralisationsschlammes in Leitung 24 rückgeführt.

1000 kg abfiltrierter und gewaschener Neutralisationssohlamm, enthaltend 190 kg $P_2O_5$ und 550 kg Wasser, wurden über Leitung 27 in den Anmaischbehälter 22 gefördert. Über die Leitung 30 wurden 280 kg 50 gewichtsprozentige Natronlauge dosiert. Die Natronlauge wurde mit 1350 l Waschwasser, enthaltend 27 kg $P_2O_5$ und 39 kg $Na_2O$, über Leitungen 33 und 29 verdünnt. Die gerührte Suspension im Anmaischbehälter 22 wurde sodann 8 Minuten bei 100 °C gehalten und heiß über die Leitung 31 im Druckfilter 23 getrennt. Über die Leitung 32 wurden 1500 l Alkaliphosphatlösung mit einem $Na_2O$ : $P_2O_5$-Molverhältnis von 3,3 : 1 abgezogen. Die Alkaliphosphatlösung enthielt 7,3 Gewichtsprozent $P_2O_5$. Der im Druckfilter 23 abgetrennte Filterkuchen wurde mit 2000 l 90 °C warmem Wasser über Leitung 34 gewaschen. Das über Leitung 33 ablaufende Waschwasser, enthaltend 2,5 Gewichtsprozent $P_2O_5$, wurde mit 350 l Wasser verdünnt. Von diesem verdünnten Waschwasser wurden über Leitung 29 1350 l zur Natronlaugeverdünnung genutzt. Der Rest wurde als Waschwasser über Leitung 28 zur Waschung des Filterkuchens im Filter 21 rückgeführt. Mit dem ablaufenden Waschwasser des Filters 21 wurden 120 kg $P_2O_5$ über die Leitung 26 zur Suspension des Neutralisationsschlammes rückgeführt.

Der über Leitung 35 aus dem Druckfilter 23 abgezogene, gewaschene Filterkuchen enthielt noch 50 kg $P_2O_5$ und 66 kg $Na_2O$, berechnet auf den trockenen Filterkuchen.

Die $P_2O_5$-Gesamtausbeute beträgt 97 %, bezogen auf die in der Neutralisation eingesetzte Rohphosphorsäure.

**Patentansprüche**

1. Verfahren zur Herstellung von Trialkaliphosphatlösung aus Neutralisationsschlämmen, welche bei der Neutralisation roher Naßverfahrensphosphorsäure anfallen, <u>dadurch gekennzeichnet</u>, daß man

   a) den Neutralisationsschlamm mit Alkalihydroxid aufschließt und dabei ein Alkalioxid : $P_2O_5$-Molverhältnis von (3,0 bis 3,7) : 1 in der gebildeten Maische einstellt,

   b) den Aufschluß des Neutralisationsschlammes gemäß a) bei Temperaturen von 90 bis 120 °C und Reaktionszeiten von 1 bis 10 Minuten durchführt,

c) in der gebildeten Maische durch Verdünnen mit Wasser eine Konzentration von 6 bis 8 Gew.-% wassergelöstes $P_2O_5$ einstellt,

d) die Maische auftrennt in die gewünschte Trialkaliphosphatlösung und einen Filterkuchen,

e) den Filterkuchen mit Wasser wäscht und einen Teil dieses Waschwassers anschließend zum Verdünnen der Maische nach c) rückführt und

f) das restliche Waschwasser zur Nachwaschung der bei der Neutralisation der Naßverfahrensphosphorsäure anfallenden Neutralisationsschlämme verwendet.

2. Verfahren nach Patentanspruch 1, dadurch gekennzeichnet, daß man das zum Aufschluß eingesetzte Alkalihydroxid mit dem rückgeführten Waschwasser vor dem Aufschluß verdünnt.

3. Verfahren nach Patentanspruch 1 oder 2, dadurch gekennzeichnet, daß man als Alkalihydroxid 40 bis 50 gew.-%ige Natronlauge verwendet.

4. Verfahren nach einem der Patentansprüche 1 bis 3, dadurch gekennzeichnet, daß man den Filterkuchen, welcher aus der Maische abgetrennt wird, mit 50 bis 150 kg Waschwasser, berechnet auf 100 kg Filtrat, wäscht.

5. Verfahren nach Patentanspruch 4, dadurch gekennzeichnet, daß man das Waschwasser auf 70 bis 100 °C vorwärmt.

Fig. 1

Fig. 2

**Europäisches**
**Patentamt**

# EUROPÄISCHER RECHERCHENBERICHT

Nummer der Anmeldung

## EP 91 10 1493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS, Band 67, Nr. 4, 24. September 1967, Seite 1291, Zusammenfassung Nr. 13385n, Columbus, Ohio, US;<br>& PL-A-51 221 (INSTYTUT CHEMII NIEORGANICZNEJ) 20-06-1966<br>– – – | | C 01 B 25/30 |
| A | CHEMICAL ABSTRACTS, Band 69, Nr. 16, 14. Oktober 1968, Seite 5664, Zusammenfassung Nr. 60418b, Columbus, Ohio, US;<br>& PL-A-54 786 (INSTYTUT CHEMII NIEORGANICZNEJ) 15-03-1968<br>– – – | | |
| A | FR-A-2 009 687 (KNAPSACK AG)<br>& DE-C-1 767 631 (Kat. D,A)<br>– – – | | |
| A | FR-A-2 091 452 (UZINA OHIMICA VALEA CALIGAREAS-CA)<br>– – – – – | | |

| | RECHERCHIERTE SACHGEBIETE (Int. Cl.5) |
|---|---|
| | B 01 B 25/00 |

Der vorliegende Recherchenbericht wurde für alle Patentansprüche erstellt

| Recherchenort | Abschlußdatum der Recherche | Prüfer |
|---|---|---|
| Den Haag | 29 Mai 91 | BREBION J.CH. |